# EUROPEAN PATENT APPLICATION

(11) **EP 2 098 630 A2**
(43) Date of publication of application: **09.09.2009**
(21) Application number: 09002619.6
(22) Date of filing: 25.02.2009
(51) Int. Cl.: D06H 5/00, A41D 27/24, B29C 65/50, B29C 65/10, B65H 35/00

(54) **Modular apparatus for adhesively assembling two fabric pieces**

(30) Priority: 29.02.2008 IT MI20080342
(71) Applicant: MACPI S.p.A. PRESSING DIVISION, 25036 Palazzolo Sull'Oglio (Brescia) (IT)
(72) Inventor: Cartabbia, Giovanni, 25036 Palazzolo Sull'Oglio (BS) (IT)
(74) Representative: Cicogna, Franco

(57) **Abstract**

A modular apparatus for adhesively assembling two fabric pieces either within or without further taping operations or for performing only a taping operation on pre-seamed or ultrasound joined fabric pieces, **characterized in that** said apparatus comprises a base construction (1) to which a plurality of either fixed or separable complementary operating modules (21,22,38) are coupled, said operating modules being designed for performing, either individually or in combination with one another, a plurality of different fabric pieces processing operations.

## Description

### BACKGROUND OF THE INVENTION

The present invention relates to a modular apparatus for continuously adhesively assembling two fabric pieces.

More specifically, the invention relates to such modular apparatus for adhesively assembling two fabric pieces which can operate based on different adhesive coupling methods, included adhesively coupling taping methods which can be either simultaneously or separately carried out.

For a single taping operation method, the latter can also be performed on joined parts which have been joined by conventional processes such as seaming, ultrasound, high frequency joining processes and the like.

As is known, the above mentioned adhesive coupling methods were conventionally performed by machines specifically designed or dedicated to perform a single coupling operation or, at a maximum, a small number of different coupling steps.

On the contrary, the inventive apparatus has been specifically designed for performing continuously assembling and/or taping methods on fabric pieces, thereby joining said fabric pieces with a joining speed and precision much greater than those afforded by conventional fabric piece coupling machines and methods.

### SUMMARY OF THE INVENTION

Thus, the aim of the present invention is to provide such a modular apparatus which is adapted to quickly and simply perform all the intended processing and coupling operations on any desired type of fabric pieces.

Within the scope of the above aim, a main object of the invention is to provide such an apparatus which can be easily and quickly set to perform any desired fabric piece adhesive coupling operations.

Another object of the present invention is to provide such an apparatus which, owing to its specifically designed constructional features, is very reliable and safe in operation.

Yet another object of the present invention is to provide such an apparatus which is very competitive from a mere economic stand point.

According to one aspect of the present invention, the above mentioned aim and objects, as well as yet other objects, which will become more apparent hereinafter, are achieved by a modular apparatus for assembling and/or taping fabric pieces to be joined by adhesive, ultrasound or seaming methods, **characterized in that** said apparatus comprises a base construction with which either fixed or separable complementary operating modules are associated, said operating modules being adapted to perform, either individually or in combination, different fabric piece processing and coupling operations.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a perspective view of the basic construction of the apparatus according to the invention, shown without its auxiliary assemblies and devices;
Figure 2 is a schematic perspective view of the apparatus including a first operating assembly;
Figure 3 is a further schematic perspective view of the apparatus including a second operating assembly;
Figure 4 is a further partially cross-sectioned perspective view showing a detail of a top overheating assembly;
Figure 5 is a schematic front view showing a region of a triple guide arrangement and the operation thereof;
Figure 6 is a perspective view showing a transfer device;
Figure 7 is a further perspective view showing a load cell;
Figure 8 is yet another perspective view showing the top overheating device;
Figure 9 is yet another perspective view showing the first operating assembly;
Figure 10 is yet another perspective view showing a simple guide arrangement;
Figure 11 is yet another perspective view showing the second operating assembly:
Figure 12 is yet another perspective view showing the triple guide arrangement;

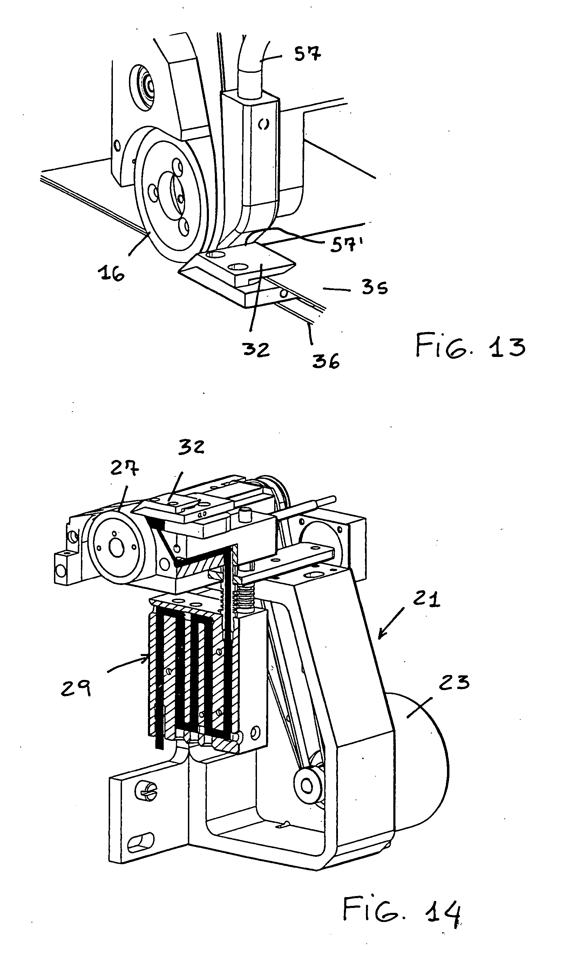

Figure 13 is yet another perspective view showing a detail of a pressing roller region;
Figure 14 is yet another partially cross-sectioned perspective view showing a double-circuit air overheating device applied to the first operating assembly; and
Figure 15 a diagram showing possible processing operations which can be carried out by the apparatus according to the present invention, depending on the used operating devices or modules and assemblies.

### DESCRIPTION OF THE PREFERRED EMBODIMENTS

With reference to the number references of the above mentioned figures, the apparatus according to the present invention comprises a base or supporting construction, to which a plurality of either fixed or separable operating module can be coupled.

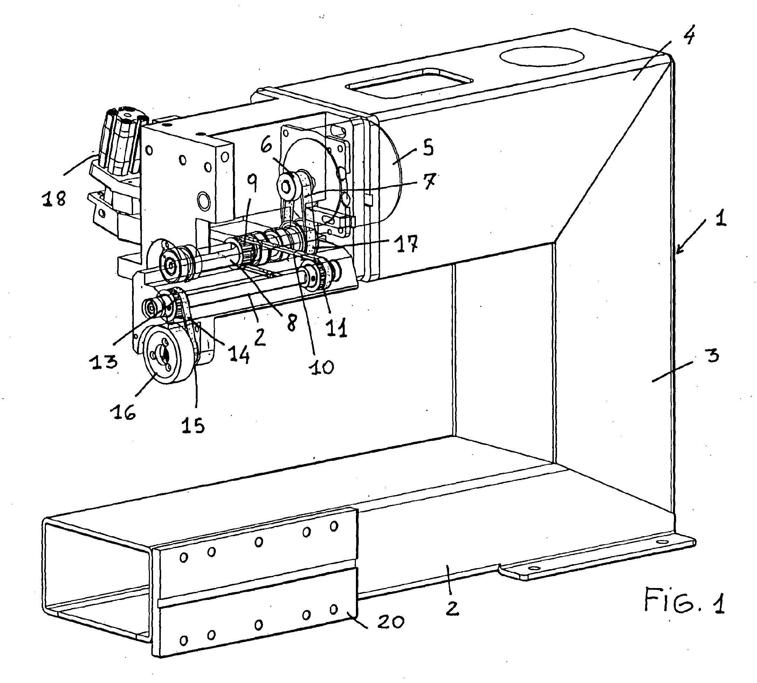

The base or supporting structure of the inventive apparatus has been shown in figure 1.

Said base construction comprises a framework 2 including a bed 2 and an upright 3 supporting a top arm 4 forming an integrating portion of the framework.

At one end portion of said top arm 4 is supported a motor 5 having a shaft to which is coupled a pulley 6 which, through a first transmission belt 7, drives a second shaft 8 supporting a second pulley 17, and a third pulley 9, which drives a second transmission belt 10 which, through a fourth pulley 11, rotatively drives a third shaft 12 supporting a fifth pulley 13.

Said fifth pulley 13, through a third transmission belt 14 and a sixth pulley 15, rotatively drives a fourth shaft rigid with a pressing roller 16.

Said pressing roller 16 is mounted on a pivoting arm which can pivot or swing about the axis of the second shaft 8.

The thus disclosed assembly is driven by a driving piston 18, which is designed for controllably raising and lowering the pressing roller 16.

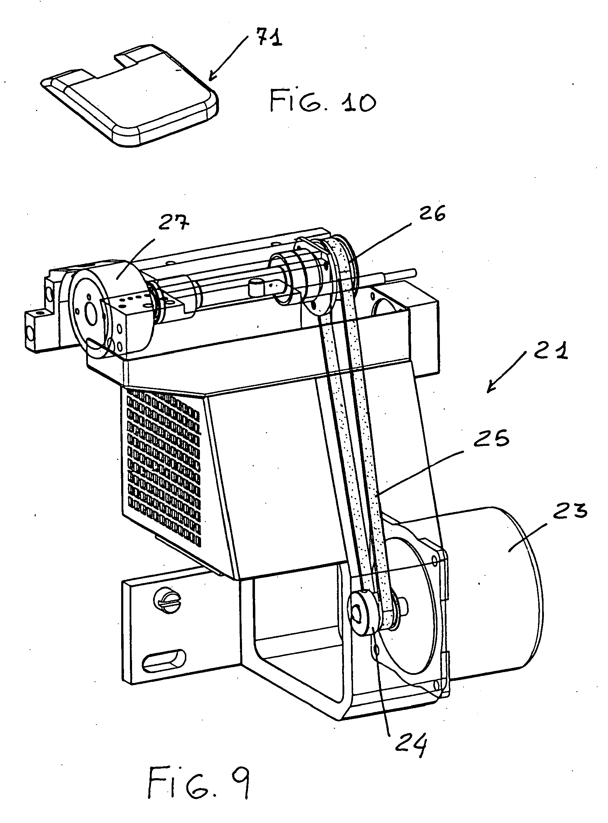

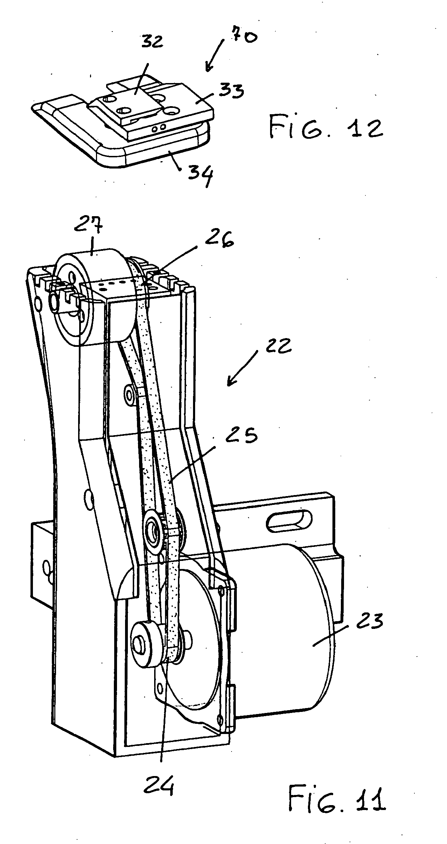

The bed 2 comprises moreover an attachment plate 20 to which several mechanical assemblies, such as a first operating assembly 21 shown in figure 9, or a second operating assembly 22, shown in figure 11, can be applied.

In particular, the second operating assembly 22 is assembled for processing tridimensional clothing portions, such as the crotch part of a trousers or the shoulder part of a jacket or of a coat.

The first operating assembly 21, owing to its specifically designed characteristics, is used for performing flat, curved and rectilinear processing operations on clothing articles such as a rear back part of the jacket or the leg parts of a trousers.

The above two mechanical operating assemblies comprises a driving motor 23 having a driving motor shaft supporting an entraining pulley 24 thereabout a transmission belt 25 is entrained.

Said transmission belt 25 drives a further pulley 26, which in turn rotatively drives a rubberized wheel 27.

With respect to the first operating assembly 21, the rubberized wheel 27 is arranged at a given spacing from the pulley 26 whereas, in the second operating assembly 22, the rubberized wheel 27 is substantially adjoining said pulley 26.

Both said operating assemblies 21 and 22 comprise a double-circuit air of a heating device 29, designed for supplying two air flows with a target temperature and flow-rate.

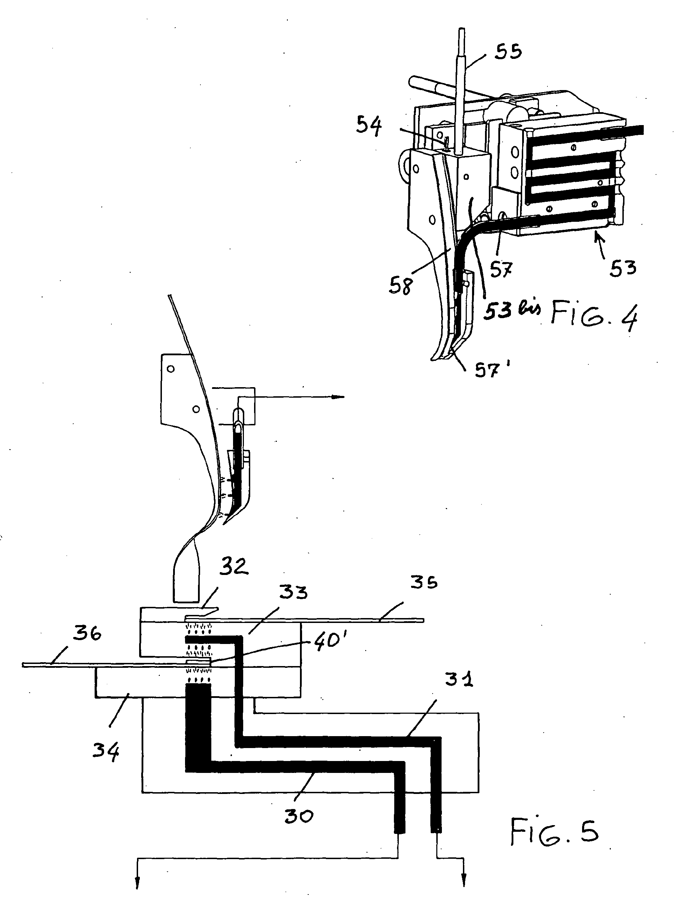

Said air flows, in particular, are conveyed by conveying ducts 30 and 31 converging in respective guides 33 and 34 shown in figure 5.

The apparatus comprises a triple guide arrangement 70, including a top guide 32, a middle guide 33 and a bottom guide 34.

Between said guides 32 and 33 a top fabric piece 35 is engaged, whereas between said guides 33 and 34 a bottom fabric piece 36 is engaged which bottom fabric piece 36 bears, on the top surface thereof, an adhesive film 40', which has been previously applied to the bottom fabric piece 36, and which can comprise either a smooth or folded edge thereof.

As stated. said ducts 30 and 31 provide respective overheated air flows.

More specifically, the first duct 30 heats the bottom part of the bottom fabric piece 36, whereas said duct 31 heats the bottom part of the top fabric piece and the top part of the adhesive material applied on the bottom fabric piece 36.

The above disclosed apparatus can comprise moreover further operating devices or modules.

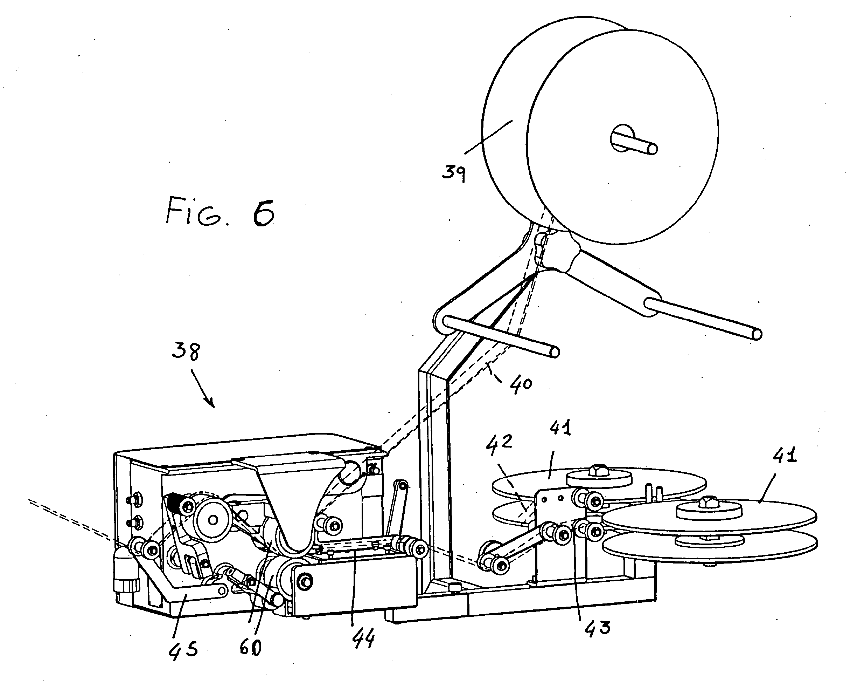

A transfer device 38, shown in figure 6, designed for allowing one or two adhesive strips 42 to be transferred, said adhesive strips 42 being supplied by two strip bobbins 41 on a textile support or fabric strip 40 and being moreover adapted to allow adhesive strip paper elements to be easily and quickly removed.

Said transfer device 38 comprises a bobbin 39 supporting said textile strip 40.

Said bobbins 41 comprise one or more adhesive strips 42, supported by a silicone processed paper material.

Said adhesive strips 42, in particular are heated by a hot plate 44 and are conveyed, together with said textile strip 40, under a pair of pressing rollers 60, for transferring the adhesive material to the textile piece and, moreover, for removing the supporting paper material.

The textile strip 40, which, with the adhesive material applied thereto is also indicated by the reference number 40', is conveyed onto a stretching device 45, including transmission rollers which, through a load cell 47, can be properly programmed to provide at an output thereof a target voltage, to be applied to the adhesive supporting textile strip 40'.

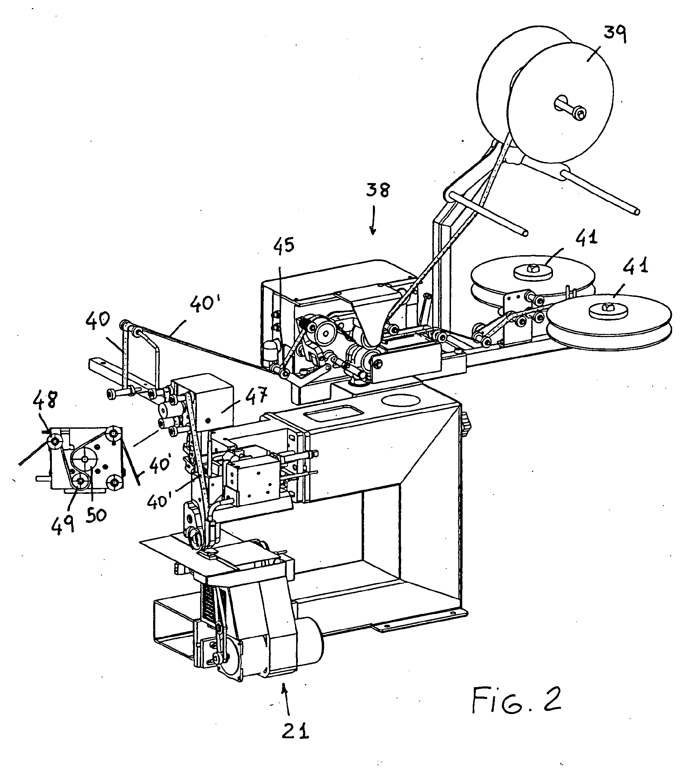

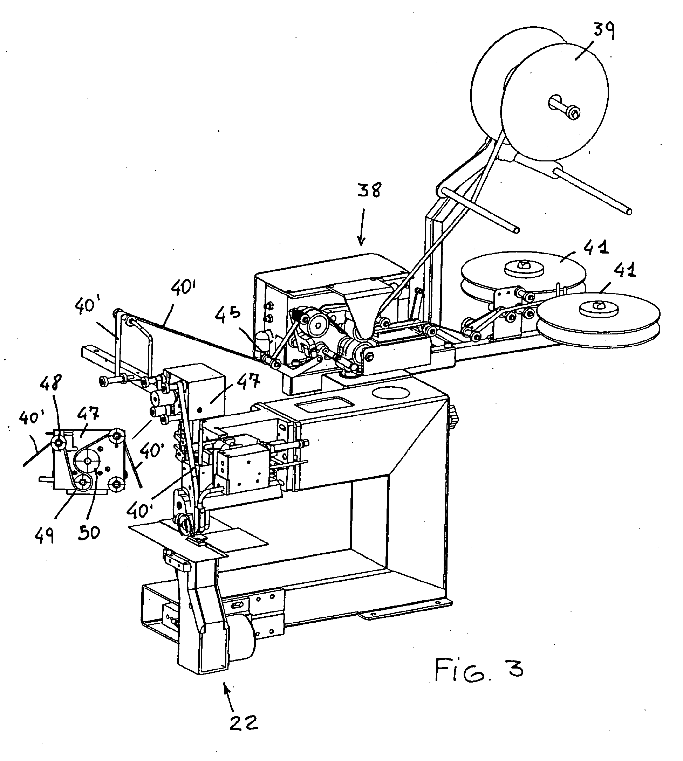

In particular, said strip 40', is conveyed to a guide pulley 48 and then between a nip region with a pressing roller 49 and a motor driven roller 50, applied to said load cell 47, as clearly shown in figures 2, 3 and 7.

Then, said strip 40' will slide in contact with a pulley 52 for detecting the stretching of said textile strip and, through said load cell 47, will drive the motor driven roller 50 to hold the stretching of the adhesive strip 40' at a target level.

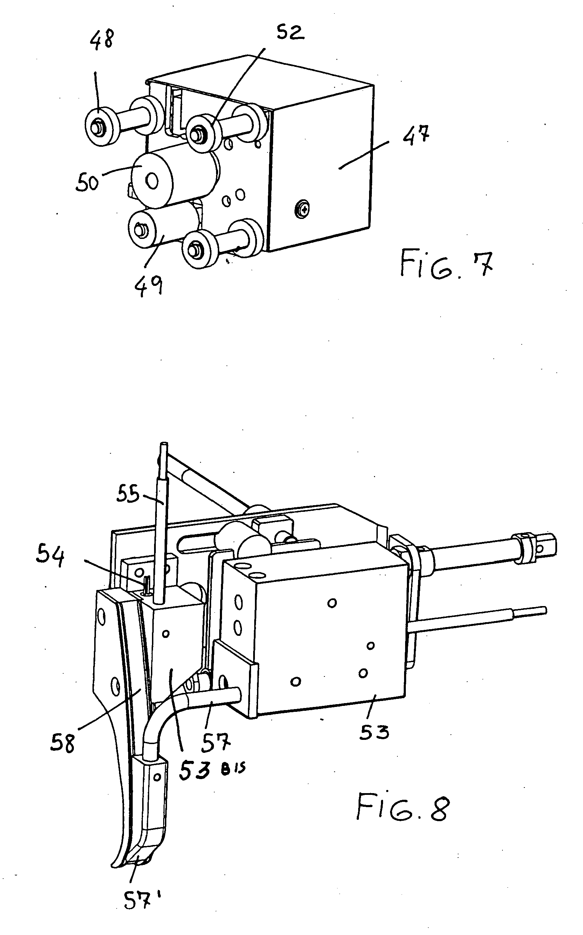

Then, the adhesive strip 40' will be controllably driven or guided by a heated guide 58, shown in figure 8, which heated guide 58 is heated by a top overheating device 53 bis including a control probe 54 and a heating resistance 55, as is shown in figures 4 and 8.

The top overheating device 53 supplies a hot air flow, exiting a duct 57, converging into a nozzle 57' for conveying the overheated air flow on the adhesive material supported by the textile strip, in turn heated at the top wall of the hot guide 58.

In this position, the fabric pieces 35 and 36 at the outlet of the guide 32 will receive the strip 40' coming from the stretching assembly, as is shown in figure 5, thereby said strip 40' will be arranged on the fabric piece to be joined.

The fabric pieces 35 and 36 and textile strip 40', in particular, will be then pressed and coupled to one another by the pressing wheels or rollers 16 and 27.

The top overheating device 53, with the exception of the guide 58, can be horizontally driven thereby allowing the adhesive strip 40' to be properly loaded and unloaded.

In a case of a non seamed fabric piece, or of a previously seamed fabric element, pre-seamed by ultrasounds or other seaming methods, the subject apparatus can be used as a simple taping apparatus, by replacing the triple guide arrangement 70, shown in figure 12, by the single guide arrangement 71, shown in figure 10, and by using the apparatus either within or without an adhesive transfer, depending on the fact that the textile strip 40 comprises a dedicated adhesive material or not.

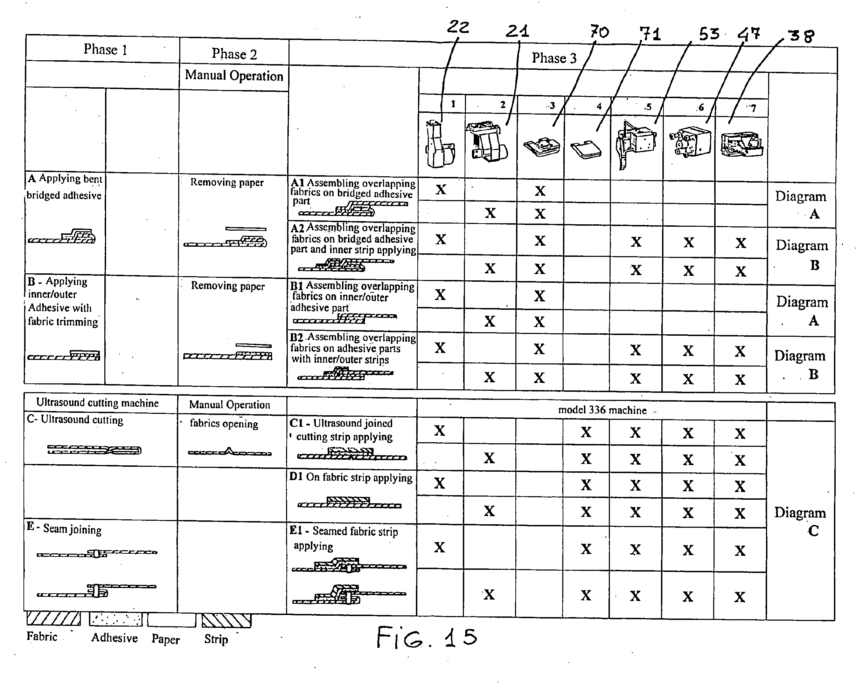

The diagram shown in figure 15 display possible processing operations which can be performed by the inventive apparatus, depending on the several used operating modules.

For example, a processing operation comprising an assembly of overlapping fabric pieces on a crotch adhesive part, as shown by A1, can be carried out either with the first or the second operating assembly, in association with the triple guide arrangement 70, said first or second operating assemblies being selected depending on a need of performing rectilinear processing operations on clothing article, such as a back portion of a jacket or the leg portion of a trouser pair, or contoured clothing article portions, such as a trouser crotch or a shoulder of a jacket or coat.

In this connection it should be pointed out that either one or the other operating assembly can be quickly and easily mounted on the attachment plate 20.

For assembling overlapping fabric pieces on a crotch adhesivized part, and to provide an inner taping operation, as shown by A2 in figure 15, the above operating module will be integrated by further taping devices comprising the transfer device 38, load cell 47 and top overheating device 53.

The processing operations indicated by the reference characters A1, A2, B1 and B2 will require the use of the triple guide 70, whereas the taping operations indicated by the reference characters C1, D1 and E1 can be performed by the simple guide 71.

It has been found that the invention fully achieves the intended aim and objects.

In fact, the modular inventive apparatus allows to perform a very broad range of processing operations, by simply applying or actuating corresponding operating modules which are already mounted on the apparatus or can be quickly interexchanged.

In practicing the invention, the used materials, as well as the contingent size, can be any, depending on requirements.

## Claims

1. A modular apparatus for adhesively assembling two fabric pieces either within or without further taping operations or for performing only a taping operation on pre-seamed or ultrasound joined fabric pieces, **characterized in that** said apparatus comprises a base construction to which a plurality of either fixed or separable complementary operating modules are coupled, said operating modules being designed for performing, either individually or in combination with one another, a plurality of different fabric pieces processing operations.

2. A modular apparatus, according to claim 1, **characterized in that** said operating modules comprises a first operating module for performing rectilinear processing operations on clothing articles such as a back portion of a jacket or a leg portion of a trousers pair, and a second operating module for processing contoured clothing portions, such as a trouser crotch portion or a shoulder portion of a jacket or a coat.

3. A modular apparatus, according to claim 1, **characterized in that** said operating modules comprise interexchangeable guide means, a triple guide and a simple guide, for guiding the fabric pieces being processed.

4. A modular apparatus, according to claim 1, **characterized in that** said operating module comprises a transfer device, a load cell and a top overheating device, adapted to allow either one or two adhesive strips to be transferred and to apply said adhesive strips on a said fabric piece.

5. A modular apparatus, according to claim 1, **characterized in that** said base construction of said apparatus comprises a framework including a bed and an upright supporting a top arm in turn supporting driving means for driving a pressing roller.

6. A modular apparatus, according to claim 5, **characterized in that** at an end portion of said top arm is supported a motor having a shaft thereon is applied a first pulley which, through a first transmission belt, drives a second shaft supporting a second pulley, said second shaft further supporting a third pulley operatively driving a second transmission belt which, through a fourth pulley, rotatively drives a third shaft supporting a fifth pulley, said fifth pulley, through a third transmission belt and a sixth pulley, rotatively driving a fourth shaft rigid with said pressing roller, said pressing roller being mounted on a swinging arm designed for swinging about an axis of said second shaft and being driven by a driving piston for controllably raising and lowering said pressing roller.

7. A modular apparatus, according to claim 1, **characterized in that** said bed comprises an attachment plate to which said first operating assembly or module or second operating assembly or module are applied, said second operating assembly performing processing operations on contoured clothing article portions, such as a crotch portion of a trouser pair or a shoulder portion of a jacket, said first operating assembly performing processing rectilinear operations on clothing articles such as on a back portion of a jacket or a leg portion of a trousers.

8. A modular apparatus, according to claim 7, **characterized in that** both said operating assemblies comprise a respective driving motor including a shaft supporting a pulley thereabout is entrained a transmission belt entraining in turn a second pulley which in turn rotatively drives a rubberized wheel.

9. A modular apparatus, according to claim 8, **characterized in that** said rubberized wheel of said first assembly is arranged at a given spacing from said pulley, whereas the rubberized wheel of said second operating assembly is arranged substantially adjoining said pulley.

10. A modular apparatus, according to claim 7, **characterized in that** both said operating assemblies comprise a double circuit air overheating device providing two air flows at a target air flow temperature and flow rate.

11. A modular apparatus, according to claim 10, **characterized in that** said air flows are conveyed by air flow conveying ducts converging into said triple guide, said triple guide comprising a top guide, a middle guide and a bottom guide, or to said simple guide.

12. A modular apparatus, according to claim 11, **characterized in that** between said top and middle guides a top fabric piece is engaged, whereas between said middle and bottom guides a bottom fabric piece is engaged, said bottom fabric piece bearing, on a top surface thereof, an adhesive film pre-applied to said bottom fabric piece and which has either a smooth or a folded edge thereof.

13. A modular apparatus, according to claim 12, **characterized in that** said ducts provide overheated air flows, a first of said duct heating a bottom portion of said bottom fabric piece, whereas the other duct heats the bottom portion of said top fabric piece and the top portion of an adhesive material applied on said bottom fabric piece.

14. A modular apparatus, according to claim 11, **characterized in that** said transfer device allows either one or two adhesive strips supplied by two adhesive strip bobbins to be transferred on a textile support, and also allowing protective paper materials to be removed from said adhesive strips.

15. A modular apparatus, according to claim 14, **characterized in that** said transfer device comprises a bobbin supporting said textile piece or strip; two bobbins holding one or more adhesive strips supported by a silicone processed paper material, said adhesive strips being heated on a hot plate and being conveyed, together with the textile material strip, under a pair of pressing rollers for transferring said adhesive material to said textile piece, and removing the supporting paper material, said adhesive textile strip being conveyed on a stretching device including transmission rollers which, through a load cell, are so programmed as to provide a target output voltage to said adhesivized textile support.

16. A modular apparatus, according to claim 15, **characterized in that** said textile support is conveyed to a first guide pulley and then between a pressing roller and a motor driven roller of said load cell.

17. A modular apparatus, according to claim 15, **characterized in that** said textile support is caused to slide in contact with a pulley for detecting the stretching of said textile support and, through said load cell, driving the motor driven roller as to hold the stretching of said adhesivized fabric at a target level.

18. A modular apparatus, according to claim 15, **characterized in that** said adhesivized fabric strip is guided by a heated guide which is heated by a top overheating device including a control probe and a heating resistance.

19. A modular apparatus, according to claim 18, **characterized in that** said top overheating device supplies a hot air flow exiting a duct converging to a nozzle conveying said hot air flow on an adhesive material supported by said textile strip, in turn being heated at a top wall of the hot guide, at this position said fabric piece, at the output of said guide, receiving the strip coming from the stretching assembly, thereby causing said strip to be arranged on the fabric piece to be joined.

20. A modular apparatus, according to claim 19, **characterized in that** said fabric piece and adhesive textile strip are pressed and coupled by the pressing rollers.

21. A modular apparatus, according to claim 19, **characterized in that** said top overheating device, with an exclusion of said guide, is horizontally driven to allow said adhesive strip to be loaded and unloaded.

22. A modular apparatus, according to claim 1, **characterized in that**, in processing an integral fabric material or a seamed fabric material, said apparatus operates as a simple taping apparatus, said triple guide being replaced by said single guide, and said apparatus being used either with or without an adhesive transfer.
